# FASCICULE DE BREVET EUROPEEN

(11) **EP 0 607 187 B1**
(45) Date de publication et mention de la délivrance du brevet: **27.11.1996**
(21) Numéro de dépôt: 92919915.6
(22) Date de dépôt: 02.10.1992
(51) Int. Cl.: A23L 1/0528, A23L 1/308, C13F 3/00, A23G 3/00, A23G 9/02, A23G 1/00, A23L 1/24, A23D 7/00

(54) **COMPOSITIONS AYANT UNE STRUCTURE CREMEUSE ET CONTENANT DU FRUCTANE, PROCEDE DE PREPARATION DE CES COMPOSITIONS ET LEUR UTILISATION**
FRUCTAN ENTHALTENDE CREMEARTIGE ZUSAMMENSETZUNGEN, VERFAHREN IHRER HERSTELLUNG UND IHRE ANWENDUNG
COMPOSITIONS HAVING A CREAMY STRUCTURE AND CONTAINING FRUCTANE, PREPARATION METHOD THEREFOR AND USES THEREOF

(30) Priorité: 04.10.1991 BE 9100914
(43) Date de publication de la demande: 27.07.1994
(73) Titulaire: RAFFINERIE TIRLEMONTOISE, 1150 Bruxelles (BE)
(72) Inventeur: FRIPPIAT, Anne, B-1933 Sterrebeek (BE); SMITS, Georges, B-9308 Gijzegem-Aalst (BE)
(74) Mandataire: Van Malderen, Michel
(86) Numéro de dépôt international: BE9200042
(87) Numéro de publication internationale: WO9306744

(56) Documents cités:
- EP-A- 0 301 235
- WO-A-86/04091
- WO-A-87/02679
- WO-A-91/13076
- US-A- 3 809 764
- US-A- 4 564 525

## Description

### Objet de l'invention

La présente invention est relative essentiellement à des compositions ayant une structure crémeuse et contenant comme l'élément essentiel pour la formation de ladite structure crémeuse du fructane, à l'emploi de ces compositions dans des produits alimentaires, tels que, par exemple, des desserts glacés, des assaisonnements pour salades des préparations chocolatées, des produits carnés, des produits de boulangerie-pâtisserie, des fourrages, des pâtes à tartiner, de la confiserie, des produits laitiers, des sauces,... et à des produits alimentaires comprenant ces compositions.

### Arrière-plan technologique et état de la technique à la base de l'invention

Le mode de vie sédentaire que nous menons de nos jours et dans lequel le travail physique a presque disparu, a complètement modifié les exigences alimentaires. A présent, bien que nous ayons besoin de moins de nourriture énergétique, nous mangeons encore trop de lipides, trop de sel et pas assez de fibres alimentaires.

La science médicale a depuis longtemps établi un lien entre une absorption de graisses et d'énergie trop élevée et le développement de situations telles que l'obésité, les troubles cardio-vasculaires, les troubles respiratoires, etc... Le message disant que "les graisses ne sont pas bonnes pour votre organisme" est transmis au grand public par l'intermédiaire des sources scientifiques qui recommandent une alimentation saine. L'idée fixe qui prévaut de nos jours, à savoir que "pour être beau, il faut être mince", a également intensifié la demande d'aliments légers (à faible teneur en graisses et en calories). Le remplacement des acides gras saturés par des acides gras insaturés dans les graisses devrait réduire le risque d'émergence de certains types de troubles cardio-vasculaires, mais n'offre aucune protection contre d'autres désordres et n'apporte aucun avantage pour les personnes suivant un régime amaigrissant.

L'élimination simple ou la réduction de la quantité de graisses dans les aliments préparés (par exemple les frites pré-cuites ou les croissants à mettre au four) a tendance à donner un goût sec et non appétissant aux produits, si bien que l'on ne peut retenir cette solution pour de nombreuses applications.

Par conséquent, il existe encore un besoin important de compositions alimentaires susceptibles de trouver une place dans une alimentation équilibrée par un remplacement partiel, voire même total, des graisses par un substitut des graisses qui offre les propriétés gustatives et physiques des compositions alimentaires traditionnelles. Le public actuel exige des aliments à faible valeur calorique et à faible teneur en graisses, mais souhaite qu'ils soient aussi appétissants que les aliments traditionnels.

Les substituts des graisses couramment disponibles sur le marché ou au stade de développement sont basés sur l'emploi d'hydrates de carbone (tels que des produits à base d'amidon), de protéines, d'esters et d'éthers. Certains substituts des graisses sont constitués par un mélange de composés de différentes classes. Le Docteur H.W.A. Teeuwen, dans son article "Les substituts des graisses: lucratifs, mais risques" paru dans International Food Ingredients, 1991, n° 2, p. 4-11, donne un très bon aperçu de l'état de la technique:

### "- Substituts de graisses basés sur des hydrates de carbone.

Des solutions colloïdales d'amidons partiellement hydrolysés, tels que des dextrines, des maltodextrines et des amidons hydrolysés par voie enzymatique, peuvent être envisagés comme substituts des graisses. Le Paselli SA2®, produit par AVEBE, une société hollandaise, est un exemple de ce groupe de substituts de graisses. Comme ces crèmes ne résistent pas à une exposition prolongée à des températures élevées, elles ne conviennent qu'aux aliments qui sont préparés à des températures relativement basses, tels que des sauces, de la mayonnaise, des pâtes à tartiner et des desserts glacés. Dans la plupart de ces applications, les crèmes ne peuvent remplacer plus de la moitié environ de la teneur en graisses sans affecter la qualité du produit. Contrairement aux autres produits qui sont absorbés complètement par voie digestive, le polydextrose, un polymère synthétique de D-glucose, hautement ramifié, dans lequel diverses liaisons glucosidiques s'entrecroisent, est très difficile à digérer. Il résiste raisonnablement aux températures normales du four, mais se décompose lorsque l'on l'utilise pour frire, frire à coeur ou rôtir. Comme les crèmes à base d'hydrates de carbone, le polydextrose ne peut remplacer qu'une partie des graisses dans ces produits, parce que le remplacement de la totalité des graisses entraînerait, par exemple, une perte d'arôme.

### - Substituts des graisses basés sur des protéines ("microparticules de protéines").

L'on se réfère ici à des protéines qui ont subi un processus breveté de chauffage suivi par une coagulation partielle sous foisonnement intensif (connu sous le nom de "micro-particulation"), qui désagrège les protéines en de très petits globules. Le produit appelé Simplesse®, développé par la NutraSweet Co, est constitué de protéines provenant d'albumine d'oeuf ou de lait écrémé. La limitation la plus sérieuse du Simplesse® est sa médiocre stabilité thermique.

### - Substituts des graisses basés sur des esters.

Le groupe hétérogène d'esters de cette classe contient un certain nombre de composés qui semblent potentiellement idéaux comme substituts des graisses: hautement résistants à la chaleur, de valeur énergétique très basse, voire même nulle, et appropriés au remplacement de (presque) toutes les graisses dans une large gamme d'aliments. La plupart de ces substituts des graisses sont encore au stade de développement et l'avenir nous dira si leurs propriétés toxicologiques et physiologiques se révèlent acceptables. Les polyesters de saccharose (SPE) constituent un exemple de cette classe de composés. L'Olestra®', produit par Procter et Gamble, est le meilleur SPE le mieux connu. Il existe cependant certains inconvénients à l'utilisation massive d'Olestra®, tels que les pertes anales, la solubilité de certaines vitamines (A, D, K et surtout E), l'absence de recherches qui permettraient de savoir s'il existe des microorganismes susceptibles de décomposer les SPE,... Des solutions permettant de minimiser certains de ces problèmes ont été avancées, mais elles ne sont pas encore satisfaisantes (se référer à l'article du Docteur Teeuwen, p. 6, colonne de droite).

### - Substituts des graisses basés sur des éthers.

Le remplacement des liaisons ester d'une molécule de graisse par des liaisons éther permet d'obtenir une molécule plus stable. Elle est habituellement plus résistante aux hautes températures, à l'hydrolyse enzymatique et aux milieux fortement acides et salés. Relativement peu de recherches ont été effectuées sur les graisses d'éthers, soit en général, soit de manière plus spécifique au niveau de leurs qualités comme substituts des graisses."

D'autres inconvénients de certains substituts des graisses ont une saveur désagréable et un aspect physique ressemblant davantage à un gel d'amidon qu'à la structure onctueuse des graisses.

Des fructanes ayant un degré de polymérisation (DP) moyen égal ou supérieur à 5, tels que, par exemple, l'inuline peuvent également être utilisés comme substituts partiels des graisses ou des sucres dans certaines préparations alimentaires, mais leurs propriétés fonctionnelles, telles que la solubilité, ont jusqu'à présent notablement limité leur gamme d'applications possibles. L'inuline, par exemple, a une faible solubilité comparée, par exemple, à celle du saccharose. A 20°C, seulement 10% environ d'inuline ayant un DP moyen d'environ 9 peut être dissoute dans l'eau; à 60°C, on peut obtenir des solutions aqueuses contenant que 25% d'inuline.

Par ailleurs, lorsque l'on laisse des solutions chaudes d'inuline refroidir, l'inuline se dépose rapidement et l'on obtient un précipité au fond du récipient. Ceci est probablement dû à la rétrogradation des molécules quasi linéaires d'inuline, par laquelle les molécules s'associent par des liens d'hydrogène en expulsant l'eau qui était présente entre les molécules. Ce processus de rétrogradation est accéléré par chaque action physique, y compris une agitation modérée.

Comme il est impossible d'ajouter aux aliments des solutions concentrées de fructanes, tels que de l'inuline, ils sont souvent mélangés aux autres ingrédients alimentaires sous forme de poudre. Le désavantage d'une telle méthode est que les produits alimentaires ont un goût et une texture sableuses. De plus, il est souvent impossible de mélanger de façon homogène la quantité requise d'inuline avec les autres ingrédients alimentaires.

La demande japonaise de brevet n° 2-81156 décrit des produits alimentaires à basse teneur en calories, contenant une composition de fructanes du type B-2,1 avec un degré de polymérisation de 10 à 100, et ayant une structure aqueuse pâteuse.

La demande japonaise de brevet n° 2-81155 décrit un procédé de préparation par un traitement thermique de la composition à structure aqueuse pâteuse susmentionnée.

On a également décrit des mélanges de fructanes et de liquides, à structure non-crémeuse et destinés à la préparation de compositions immuno-thérapeutiques (WO-A-8 702 679), de mousses (US-3 809 764) ou de compositions solubles permettant de stabiliser des suspensions colloïdales (WO-A-8 604 091).

### Buts de l'invention

La présente invention vise à fournir une nouvelle composition d'un fructane ou d'un mélange de fructanes qui puisse être utilisé comme produit alimentaire, ou être ajouté à d'autres produits alimentaires, sans diminuer les qualités organoleptiques desdits produits alimentaires et sans provoquer de sensation sèche en bouche, tout en présentant des propriétés nutritionnelles améliorées, telles que la prolifération de la flore intestinale utile, la réduction du taux de cholestérol dans le corps et un effet de fibres alimentaires.

Un autre but de la présente invention vise à fournir des compositions qui permettent d'incorporer de plus grandes quantités d'eau dans un produit alimentaire, tel que le chocolat, ou dans une préparation destinée à la fabrication d'un tel produit alimentaire.

### Eléments caractéristiques de l'invention

La présente invention décrit à présent des compositions ayant une structure crémeuse comprenant un fructane ou un mélange de fructanes, mélangé dans un liquide tel que de l'eau froide ou modérément chaude, du lait, du blanc d'oeuf, du jaune d'oeuf ou du sirop de sucre, donnant lieu à l'apparition de structures stables (crèmes) rappelant les matières grasses et qui offrent de nouvelles possibilités d'applications dans des produits d'alimentation humaine ou animale, y compris la nourriture pour chiens, chats, etc..., ainsi que dans des préparations destinées à la fabrication de produits d'alimentation humaine ou animale.

Par la suite, les termes "composition alimentaire" et "produit alimentaire" réfèrent à des produits destinés aussi bien à l'alimentation humaine qu'à l'alimentation animale, y compris la nourriture pour chiens, chats, etc...

Conformément, l'objet principal de la présente invention est de fournir des compositions ayant une structure crémeuse comprenant un fructane ou un mélange de fructanes et un liquide qui peuvent être utilisées dans des compositions alimentaires et qui pallient la plupart des inconvénients de l'état de la technique.

Avantageusement, la composition selon l'invention comprend également un composant, de préférence un hydrate de carbone qui influence la mise en solution et la dispersion du fructane ou du mélange de fructanes et/ou diminue l'agglomération de la composition selon l'invention lors de la reconstitution après séchage de la composition.

L'invention concerne également la composition selon l'invention, séchée et comprenant ce composant et/ou préparée à partir de composants séchés ou coséchés.

De préférence, le fructane ou un composant du mélange de fructanes est de l'inuline ou du levane qui peut être déramifié, ramifié ou partiellement hydrolysé; la concentration en inuline ou en levane dans la composition variant entre 5 et 85%.

Avantageusement, l'inuline contient plus de 10% d'oligosaccharides avec un degré de polymérisation compris entre 2 et 10.

La composition selon l'invention est obtenue par un procédé de préparation dans lequel un fructane ou un mélange de fructanes est mélangé dans un liquide et est soumis à des forces de cisaillement importantes.

Un autre aspect de l'invention réside dans un procédé d'incorporation de quantités importantes d'un fructane ou d'un mélange de fructanes dans un produit alimentaire ou dans une préparation destinée à la fabrication d'un produit alimentaire, dans lequel on ajoute audit produit alimentaire ou à ladite préparation, la composition selon l'invention.

Ce procédé, tout en préservant l'aspect, la consistance, le goût et l'arôme dudit produit alimentaire, permet d'obtenir des propriétés organoleptiques supérieures comparées à celles des produits alimentaires auxquels un fructane ou un mélange de fructanes a été ajouté sous la forme de poudre ou en solution.

La présente invention concerne également un nouveau procédé de substitution partielle ou totale des graisses dans un produit alimentaire ou dans une préparation destinée à la fabrication d'un produit alimentaire dans lequel les graisses du produit alimentaire ou de la préparation sont remplacées partiellement ou totalement par une composition selon l'invention; ou dans lequel on forme la composition selon l'invention in situ, en ajoutant le fructane ou un mélange de fructanes et le liquide aux autres constituants alimentaires tout en soumettant ceux-ci à des forces de cisaillement importantes.

Un autre aspect de l'invention réside dans un procédé permettant de stabiliser l'eau dans un produit alimentaire, tel que le chocolat, ou dans une préparation destinée à la fabrication d'un produit alimentaire, par l'addition de la composition selon l'invention.

De cette façon, des quantités plus grandes d'eau peuvent être incorporées dans des compositions alimentaires.

L'invention concerne également un produit alimentaire, tel que le chocolat, ou une préparation destinée à la fabrication dudit produit alimentaire, éventuellement réduit ou exempt de graisses ou comprenant un pourcentage plus élevé d'eau, caractérisé en ce qu'il comprend en dehors des composants alimentaires usuels la composition selon l'invention.

L'invention concerne en particulier un produit alimentaire ou une préparation destinée à la fabrication d'un produit alimentaire, éventuellement à teneur réduite en graisses, voire même exempt de graisses, qui possède un excellent goût et une excellente texture, ainsi que des propriétés nutritionnelles avantageuses, favorisant notamment la prolifération de la flore intestinale utile (Bifidobacterium species en particulier) et la réduction du taux de cholestérol dans le corps et assurant un effet de fibres alimentaires, tout en ne provoquant pas de sensation sèche en bouche, ce produit pouvant en outre être aisément préparé.

Par ailleurs, l'emploi de la composition selon l'invention dans les aliments peut donner lieu à d'importantes réductions caloriques. Avec des hydrates de carbone digestibles ou des protéines remplaçant les graisses, la réduction calorique est due au fait que les graisses (9 kcal/g) sont remplacées par un mélange d'hydrates de carbone (4 kcal/g) et d'eau ou par un mélange de protéines (4 kcal/g) et d'eau. Avec des fructanes, qui ne sont pas digestibles et ont une valeur calorique nettement inférieure (par exemple, 1 kcal/g pour l'inuline) à celle des protéines et des hydrates de carbone digestibles, il est possible d'obtenir une réduction énergétique supplémentaire.

Il est évident que toute combinaison de la composition selon l'invention avec un autre substitut des graisses, avec un agent épaississant ou gélifiant, avec un stabilisateur et/ou un dispersant, peut être utilisée pour la préparation des produits alimentaires à teneur réduite en graisses, voire même exempts de graisses.

Un dernier aspect de l'invention concerne l'utilisation de la composition selon l'invention sous la forme d'un produit alimentaire ou d'une préparation destinée à la fabrication d'un produit alimentaire pour l'humain ou l'animal, sous la forme d'un substitut des graisses ou des huiles ou d'un substitut d'hydrates de carbone ou d'un stabilisant, ou afin d'incorporer une plus grande quantité d'eau dans ledit produit alimentaire ou ladite préparation.

### Description détaillée de l'invention

Conformément à la présente invention, on a découvert qu'une composition ayant une structure crémeuse et comprenant du fructane peut être produite par des procédés qui induisent un cisaillement élevé à un fructane ou un mélange de fructanes et à un liquide, tel que de l'eau, du lait, du blanc d'oeuf, du jaune d'oeuf, du sirop de saccharose,...

Le cisaillement élevé peut être obtenu par l'utilisation de différents équipements standards, tels que par exemple, des mixers, des broyeurs à boules, des appareils de cisaillement à haute vitesse tels qu'un Ultra-Turrax® T25 ou un hydroshear, et d'autres appareils semblables. Le fructane ou un mélange de fructanes, en présence d'un milieu aqueux, peut également être soumis à une action de cisaillement et de frottement entre les particules en forçant le mélange au travers d'un homogénéisateur ou d'un extrudeur, en le soumettant à l'action d'un réacteur à ultrasons ou en le chauffant selon le procédé de préparation décrit dans la demande japonaise de brevet n° 2-81155.

Les compositions de crème sont stables; elles ne donnent pas lieu à une floculation et à une séparation en deux couches, même sous une action physique, et elles retiennent leur texture de crème lorsqu'elles sont chauffées à des températures auxquelles le fructane ou le mélange de fructanes n'est pas complètement et parfaitement solubilisé.

L'aspect et la consistance de la structure crémeuse peut varier fortement, par exemple entre l'aspect et la consistance d'une sauce de type "dressing" (liquide très visqueux) à l'aspect et la consistance de la margarine ou de la "crème Nivea®", et même jusqu'à la forme plus dure du beurre froid, et cela quelle que soit la structure physicochimique de la crème (p.ex. du type gel, dispersion, émulsion, ou une combinaison de ces différentes structures).

Conformément à une forme de réalisation préférée de la présente invention, le fructane ou un composant du mélange de fructanes est de l'inuline, du levane, de l'inuline ou du levane qui a été modifié par une réaction de ramification ou de déramification ou par une hydrolyse partielle.

L'inuline utilisée dans la présente invention est une substance aisément disponible, de faible coût, qui peut être obtenue à partir de l'Helianthus tuberosus, du Cichorium intybus, du Dahlia, ou d'autres plantes largement répandues dans le monde. Comme on le sait généralement, l'inuline est un produit polydispersé de formule générale GFₙ (G = glucose, F = fructose, n variant de 2 à plus de 60).

L'inuline contient donc naturellement une quantité importante d'oligosaccharides avec un degré de polymérisation inférieur à 10. L'inuline commerciale extraite de la chicorée, par exemple, contient environ 25% de ces oligosaccharides, et contient plus de 50% d'oligosaccharides avec un degré de polymérisation de 2 à 20.

L'époque de la récolte joue un rôle important dans la composition de l'inuline. En récoltant les racines de chicorée vers la fin de septembre ou au début d'octobre, l'on obtient une inuline ayant un pourcentage élevé de longues chaînes GFn. Plus la date de la récolte est tardive, plus les chaînes GFₙ sont courtes. Par ailleurs, la longueur moyenne des chaînes d'inuline varie également selon la source dont elle est extraite. De plus, par des techniques de séparation telles que, par exemple, la chromatographie, l'on peut séparer la fraction d'inuline à chaînes courtes de la fraction à chaînes plus longues et donc faire varier la longueur moyenne des chaînes ou le degré de polymérisation moyen de l'inuline. La longueur moyenne des chaînes d'inuline est très importante dans la mesure où elle influence la solubilité de l'inuline et affecte par conséquent la préparation et les caractéristiques de la crème.

Un effet inattendu de l'utilisation d'inuline extraite de la chicorée dans la composition selon l'invention est que la présence d'oligosaccharides très solubles dans l'eau, avec un degré de polymérisation de 2 à 10, en quantités importantes, non seulement n'empêche pas la formation de la structure crémeuse décrite, mais en plus améliore les caractéristiques organoleptiques des produits alimentaires contenant ladite composition (p. ex. une sensation en bouche plus onctueuse).

La grande majorité des unités de fructose de l'inuline sont liées l'une à l'autre par une liaison β 2 1. Une analyse détaillée a révélé récemment qu'un faible pourcentage (jusqu'à 5%) des unités constitutives de l'inuline pouvaient être ramifiées. Plus le pourcentage de ramification de l'inuline est important, plus l'inuline devient soluble. Des essais ont montré que, lorsque l'on utilise de l'inuline ramifiée, préparée selon les méthodes décrites dans la co-demande de brevet international WO91/13076 au nom de la Raffinerie Tirlemontoise, incorporée au présent brevet à titre de référence, avec un pourcentage de ramification de 8%, l'on a besoin d'une concentration notablement supérieure d'inuline dans le mélange pour obtenir une crème que lorsque l'on utilise de l'inuline avec seulement 2% de ramification. Par ailleurs, une déramification de l'inuline qui peut, par exemple, être réalisée par réaction avec une hydrolase de levane, abaissera encore la concentration en inuline nécessaire à la préparation d'une crème et, par suite, étendra la gamme d'applications de l'inuline.

En outre, on peut influencer la solubilité de l'inuline en ajoutant d'autres substances, telles que des sels, des hydrates de carbone (par exemple du saccharose), des protéines, des gommes telles que des gommes de xanthane, des gommes de caroube, des gommes de guar, du carboxyméthyl cellulose, des carraghénanes, des alginates, des graisses, et/ou un mélange d'entre-eux, au mélange d'inuline et d'eau ou de lait ou de blanc d'oeuf ou du jaune d'oeuf ou du sirop de sucre.

En outre, de telles substances permettent également de prévenir l'agglomération des particules de la composition selon l'invention lorsque celle-ci est séchée.

En effet, lors du séchage de la composition selon l'invention, une agglomération des particules (probablement due à la formation de nouveaux liens hydrogènes) a lieu; et lorsque la composition est redispersée dans un milieu liquide, une nouvelle dépense d'énergie est nécessaire pour briser ces liens hydrogènes et reformer une composition à structure crémeuse stable et homogène.

Ces substances peuvent être additionnées à la composition selon l'invention, sous forme de poudre sèche (pour autant que la composition selon l'invention soit suffisamment liquide pour hydrater la substance additionnée à la composition), sous forme d'une solution concentrée ou sous forme d'une structure pâteuse aqueuse.

Comme l'on peut le constater dans les paragraphes précédents, en modifiant tous ces différents paramètres qui influencent la solubilité de l'inuline et, par suite, son aptitude à former une crème, l'on peut préparer une gamme complète de crèmes présentant des concentrations largement variables en inuline fluctuant, de 5 à 85% ou plus.

L'on peut également utiliser d'autres fructanes tels que, par exemple, du levane. Comme le levane microbien est ramifié, il peut être souhaitable de le déramifier d'abord par une réaction avec une inulinase.

Conformément à une autre forme de réalisation de l'invention, des compositions de crèmes de fructane ou contenant du fructane sont utilisées come substituts des graisses et/ou des huiles dans des produits alimentaires. Le remplacement des triglycérides par des compositions de crèmes de fructane ou contenant du fructane peut se faire proportionnellement par une quantité identique des compositions de crèmes que des triglycérides, c'est-à-dire sur la base d'une substitution de "un par un" en poids. Par ailleurs, des mélanges d'une composition de crème contenant du fructane avec d'autres substituts des graisses mentionnés ci-dessus, ou avec des agents épaississants ou gélifiants, ou avec des stabilisateurs ou des dispersants, peuvent également être utilisés pour remplacer partiellement ou totalement les triglycérides dans des produits alimentaires. Dans le cas de compositions alimentaires dans lesquelles des oeufs ou des émulsifiants contenant des glycérides sont mis en oeuvre, des petites quantités de graisses seront toujours présentes. Dans ce cas, l'on ne peut obtenir que des produits alimentaires "virtuellement exempts de graisses".

Conformément à une forme de réalisation spécifique de la présente invention, le fructane utilisé comme substitut des graisses est de l'inuline ou de l'inuline modifiée.

Cela peut se faire en ajoutant la composition de crème à base d'inuline aux produits alimentaires ou en produisant la crème in situ en appliquant un cisaillement élevé au mélange des différents composants qui constituent le produit alimentaire. Cette dernière méthode peut uniquement être appliquée si la concentration en inuline et en autres composants du produit alimentaire final est assez élevée pour produire une crème. L'inuline peut être ajoutée aux produits alimentaires sous forme de poudre ou en solution mais, comme mentionné ci-dessus, ces procédures ont de très sérieuses limitations: la faible solubilité de l'inuline ne permet pas d'ajouter de grandes quantités d'inuline sous la forme d'une solution, tandis que l'addition de poudre d'inuline, en tant que telle, modifie généralement les propriétés organoleptiques des produits alimentaires obtenus (l'on peut observer, par exemple, une texture sableuse). Nous avons constaté, en fait, que l'emploi de crème d'inuline dans des produits alimentaires offre des avantages vis-à-vis de la simple addition d'inuline dans des aliments: une sensation plus grasse et plus crémeuse dans la bouche, une texture plus lisse et plus onctueuse, un aspect plus brillant et plus visqueux, sans saveur désagréable, sont obtenus. Lorsque des produits alimentaires, préparés avec de la crème d'inuline, ont été évalués par un panel de dégustateurs, aucune sensation sèche en bouche n'a été observée.

Il est également très difficile de mélanger de manière homogène de grandes quantités de poudre d'inuline dans des préparations alimentaires. Dans certains cas, par exemple au cours de la préparation de produits carnés, il est même impossible d'ajouter de la poudre d'inuline car celle-ci forme des grumeaux, adhère au cutter et ne se mélange pas aux autres ingrédients. Dans tous ces cas d'espèces, l'emploi de crème d'inuline offre une solution idéale.

Par ailleurs, en utilisant de la crème, l'on peut substituer des quantités beaucoup plus grandes d'autres produits, tels que des graisses ou des sucres, par de l'inuline si bien que, non seulement l'on peut produire des aliments contenant moins de graisses ou de sucres, mais l'on peut même obtenir de nouveaux produits exempts de graisses et/ou de sucres, tout en conservant la texture, la sensation en bouche, le goût et la qualité des produits alimentaires traditionnels.

L'on a également constaté que les compositions de crèmes d'inuline peuvent être utilisées de manière efficace et aisée comme stabilisants et agents anti-synérétiques dans divers produits, émulsions et mousses alimentaires, notamment dans des produits laitiers, des assaisonnements pour salades, des mousses,... Dans ce cas, une quantité moindre d'inuline est nécessaire sous la forme de crème pour obtenir un effet stabilisateur comparable, voire même supérieur, à celui obtenu avec de la poudre d'inuline. Dans du yoghourt, par exemple, préparé avec 10% de crème contenant 50% d'inuline, le lactosérum ne se sépare pas, même après une longue période de conservation, tandis que l'utilisation de 10% d'inuline en poudre ne peut toujours pas prévenir la séparation du yoghourt en deux couches.

Par ailleurs, l'on a également constaté que les compositions de crèmes d'inuline peuvent être utilisées pour incorporer de l'eau dans des produits alimentaires, tels que du chocolat qui peut ainsi contenir un plus grand pourcentage d'eau. Le chocolat ainsi produit a un point de fusion plus élevé et convient dès lors mieux à la consommation dans des pays plus chauds. D'autres compositions, aptes à retenir l'eau sous une forme stable, peuvent aussi convenir à la préparation de ce type de chocolat.

L'emploi de ces compositions de crèmes de fructane et, plus spécifiquement des compositions de crèmes d'inuline, est particulièrement intéressant du point de vue nutritionnel dans la mesure où il combine un bon effet de fibres alimentaires et la promotion de la prolifération de la flore intestinale utile à la réduction de l'ingestion de graisses et à la diminution du taux de cholestérol dans l'organisme.

Les exemples suivants, sans être limitatifs, sont destinés à illustrer la présente invention.

### Exemple 1: Préparation de compositions de crèmes d'inuline dans de l'eau

Verser 250 ml d'eau à température ambiante dans un bécher et placer un Ultra-Turrax® T25 de la firme Jenke & Kunkel Co dans le bécher. Ajouter 250 g d'inuline d'un DP moyen de 8,7 par petites quantités, afin d'éviter la formation de grumeaux, tandis que l'Ultra-Turrax® tourne à pleine vitesse. Après l'addition complète de l'inuline, continuer le cisaillement pendant 2 à 3 minutes. La crème commence déjà à se former au cours de l'opération. La crème d'inuline est blanche et opaque et montre une texture courte, analogue à celle des graisses, avec des caractéristiques pseudo-plastiques (elle peut être aisément déformée et conserve alors sa nouvelle forme). Elle présente un comportement rhéologique thixotropique. La crème d'inuline est parfaitement stable et ne montre ni dépôt, ni floculation.

Lorsque l'on modifie les quantités d'eau et d'inuline à 350 ml et 150 g respectivement, l'Ultra-Turrax® doit continuer à fonctionner pendant au moins 10 minutes une fois que toute l'inuline a été ajoutée. La crème ne se forme alors qu'après 2 ou 3 heures de repos à température ambiante et présente une dureté inférieure. Lorsque le bécher est placé au réfrigérateur après le cisaillement, la formation de la crème est accélérée.

Lorsque l'on utilise de l'eau bouillante, seul le mélange d'inuline et d'eau à 50% donne une crème. Le mélange d'eau et d'inuline à 30% ne forme pas de crème (l'on observe, au contraire, un dépôt et l'apparition de deux couches distinctes), à moins que l'on influence la solubilité de l'inuline.

Au lieu de l'Ultra-Turrax®, l'on peut utiliser d'autres dispositifs qui induisent un effet de cisaillement, tels qu'un mixer, un homogénéisateur, une extrudeuse, un hydroshear,...

En général, l'on peut dire que les crèmes d'inuline peuvent être formées par cisaillement de diverses façons, à condition qu'au moins une partie de l'inuline reste non solubilisée au cours de l'opération. La viscosité et la fermeté des crèmes d'inuline augmentent lorsque la teneur en inuline augmente. Ces caractéristiques sont également influencées par le procédé de cisaillement, par la présence d'autres composants dans le mélange,... L'effet de ces paramètres sur la dureté de la crème est illustré dans le tableau ci-dessous et dans l'exemple 4:

**Tableau**

| Dureté de différentes crèmes inuline-eau | | | |
|---|---|---|---|
| Concentration en inuline (%) | Appareil de cisaillement | Mode opératoire | Dureté en Newton (N) |
| 30 | mixer | 22°C, 5 min. maturation au réfrigérateur | 0,96 |
| 30 | mixer | 22°C, 5 min. maturation à température ambiante | 0,88 |
| 30 | Ultra-Turrax® | 22°C, 15 min. | 0,85 |
| 30 | homogénéisateur⁽²⁾ | 22°C, 200 bars | 2,01 |
| 30 | hydroshear⁽²⁾ | 22°C, 20 bars | 2,27 |
| 30 | hydroshear⁽²⁾ | 22°C, 20 bars, 5 min. de recirculation | 3,90 |
| 30⁽¹⁾ | mixer | 22°C, 5 min. | 1,46 |
| 30 | mixer | 22°C, 5 min., pH 3 | 1,24 |
| 30 | mixer | 85°C, 5 min. | 0,04 (pas stable) |
| 30 | homogénéisateur⁽²⁾ | 56°C, 200 bars | 0,47 |
| 30⁽¹⁾ | mixer | 85°C, 5 min. | 1,34 |
| 50 | mixer | 22°C, 5 min. | 1,35 |
| 50⁽¹⁾ | mixer | 22°C, 5 min. | 1,83 |
| 50 | mixer | 100°C, 5 min. | 3,89 |
| 50 | homogénéisateur⁽²⁾ | 50°C, 200 bars | 1,55 |

| | | | |
|---|---|---|---|
| ⁽¹⁾: L'inuline mise en oeuvre avait un DP moyen de 10,3. Dans les autres expériences, l'on a utilisé de l'inuline avec un DP moyen de 8,7. | | | |
| ⁽²⁾ : L'homogénéisateur et l'hydroshear étaient des appareils de la firme APV Gaulin. | | | |

### Exemple 2: Préparation d'autres compositions de crèmes d'inuline

Dans le tableau suivant, l'on a énuméré plusieurs ingrédients susceptibles d'être utilisés pour la préparation de différentes compositions de crèmes d'inuline. La procédure opératoire utilisée est la même que dans l'exemple 1.

| **Ingrédient A** | **Ingrédient B** |
|---|---|
| 50 g de blanc d'oeuf | 50 g d'inuline |
| 70 g de blanc d'oeuf | 30 g d'inuline |
| 50 g de blanc d'oeuf | 100 g de crème d'inuline (50% dans l'eau) |
| 50 g de lait écrémé | 50 g d'inuline |
| 70 g de jaune d'oeuf | 30 g d'inuline |
| 70 g de sirop de sucre (54% m.s.) | 30 g d'inuline |

La dureté des crèmes préparées à partir de mélanges de 30% d'inuline dans du blanc d'oeuf et de 30% d'inuline dans du lait écrémé, par un cisaillement de 5 minutes à l'aide d'un mixer, était respectivement de 0,91 N et de 0,81 N.

### Exemple 3: Préparation d'une composition de crème avec de l'inuline ramifiée

75 g d'inuline ramifiée, dans laquelle environ 8% des unités de fructose sont ramifiées, sont mélangés à 25 ml d'eau et soumis à un cisaillement pendant 5 à 10 minutes. Il se forme une crème stable.

### Exemple 4: Préparation d'une composition de crème d'inuline en présence d'autres hydrates de carbone

- Ingrédients:: 30 g d'inuline
20 g de saccharose
50 ml d'eau

Le saccharose et l'inuline sont ajoutés à l'eau tout en mélangeant. Après l'addition, le cisaillement avec l'Ultra-Turrax® se poursuit pendant 10 minutes. La crème se forme au bout de 30 minutes de repos à température ambiante.

Le cisaillement à température ambiante d'un mélange analogue pendant 5 minutes avec un mixer produit une crème ayant une dureté de 0,45 N. La dureté est moindre que dans le cas d'une crème contenant 30% d'inuline sans autre addition. Par contre, comme l'on peut le voir dans l'exemple 6 ci-dessous, l'addition du saccharose améliore la stabilité à la chaleur et aussi la durée de vie de la crème.

### Exemple 5: Comportement de compositions de crèmes d'inuline au cours de dilution et/ou d'acidification

De la crème d'inuline (30% et 50%), comme préparée dans l'exemple 1, est également obtenue en ajoutant l'inuline à de l'eau préalablement acidifiée à un pH de 3 par l'addition d'acide citrique.

Une crème d'inuline à 55% est également préparée comme dans l'exemple 1. 228 g de cette crème sont ensuite dilués à 30% en ajoutant 278 ml d'eau déminéralisée, tout en mélangeant. La structure de la crème est maintenue.

A un autre échantillon de 275 g, l'on ajoute sous agitation une solution d'acide citrique à un pH de 3 afin d'obtenir un produit contenant 30% d'inuline. La structure de la crème, qui a un pH de 4,2, est toujours stable. L'addition supplémentaire d'acide citrique concentré pour abaisser le pH de la crème à une valeur de 3 ne détériore pas la structure de la crème.

Dans toutes ces expériences, une structure stable de la crème a été obtenue et/ou maintenue.

### Exemple 6: Comportement de compositions de crèmes inuline-eau lors d'un traitement thermique

Dans les essais suivants, des crèmes d'inuline et d'eau sont chauffées à différentes températures afin de déterminer si la structure de la crème se reforme ou non lors du refroidissement:

| % de matière sèche de la crème d'inuline | Température de chauffage (°C) | Obtention de crème lors du refroidissement |
|---|---|---|
| 30 (inuline) | 60 | oui |
| 30 (inuline) | 75 | oui |
| 30 (inuline) | 90 | non |
| 30 (inuline) | 100 | non |
| 50 (inuline) | 100 | oui |
| 50 (30 inuline + 20 saccharose) | 95 | oui |
| 75 (inuline ramifiée) | 110 | oui |

### Exemple 7: Comportement des compositions de crèmes d'inuline au cours d'un stockage au froid

Des crèmes d'inuline ont été conservées au surgélateur pendant 4 semaines et soumises entre-temps à 5 cycles de congélation-décongélation (1 jour en dehors du surgélateur) sans détérioration de la structure de la crème.

### Exemple 8: Fromage frais

De la crème d'inuline peut être utilisée pour remplacer partiellement ou totalement la matière grasse (m.g.), et pour réduire le taux de cholestérol, dans les fromages frais. Comme l'inuline est partiellement soluble dans le lactosérum, elle doit être ajoutée après la séparation du caillé et du sérum. A ce stade de la fabrication, l'emploi d'inuline en poudre n'est plus possible. L'addition d'une solution d'inuline homogène est également difficile (du fait de la faible solubilité de l'inuline) et réduit la viscosité, la fermeté, la stabilité et la teneur en matière sèche (m.s.) du fromage. Pour toutes ces raisons, la crème d'inuline offre une alternative technologique idéale et permet d'obtenir un fromage frais exempt de matière grasse, présentant une texture plus lisse et plus onctueuse, ainsi qu'un goût plus crémeux (en comparaison avec un produit sans inuline ou avec de l'inuline utilisée sous forme de poudre).

### Composition (% en poids)

| | |
|---|---|
| Fromage* (0% de m.g. - 15% de m.s. | 85 |
| Crème d'inuline (50%) | 15 |

| | |
|---|---|
| * Obtenu à partir de lait écrémé, de ferments lactiques (3%) et de présure (0,005%). | |

### Procédé

Préparer la crème d'inuline (50%) dans de l'eau ou du lait écrémé (pasteurisé) comme dans l'exemple 1. Pasteuriser le lait écrémé dans un échangeur thermique à plaques (90°C - 30 secondes) et le refroidir à 25°C. Ajouter les ferments lactiques et la présure et incuber à 25°C pendant 20 heures. Séparer le caillé du sérum (par centrifugation) pour obtenir la teneur en matière sèche et la texture souhaitées. Ajouter la crème d'inuline. Mélanger convenablement et lisser le fromage. Conditionner, refroidir et conserver réfrigéré.

### Remarque

L'on peut obtenir un meilleur goût lacté en préparant la crème d'inuline dans du lait au lieu d'eau.

### Exemple 9: Cake

De la crème d'inuline est utilisée pour remplacer par exemple, 50% des graisses dans une recette de cake. Dans ce cas, le remplacement des graisses se fait proportionnellement par une quantité identique de crème d'inuline que de graisses remplacées.Le cake ainsi obtenu a un bon goût et une bonne texture. De la crème d'inuline est préférée pour obtenir une pâte homogène. Lors de l'emploi de poudre d'inuline, il est en effet, difficile d'obtenir un mélange adéquat assurant une bonne structure et l'emploi d'une solution d'inuline dans la pâte n'est pas possible car cela dilue trop fortement la pâte.

### Composition (% en poids)

| | |
|---|---|
| Farine | 25 |
| Saccharose | 25 |
| Oeufs | 24,6 |
| Crème d'inuline (50%) | 12,5 |
| Margarine | 12,5 |
| Levure artificielle | 0,4 |

### Procédé

Préparer la crème d'inuline (50%) comme dans l'exemple 1. Mélanger le saccharose, la margarine et la crème d'inuline. Ajouter les oeufs et la levure artificielle au mélange, puis la farine. Malaxer le mélange jusqu'à ce qu'il soit homogène. Placer la pâte dans des moules et cuire à 210°C pendant 45 minutes. Emballer le cake.

### Exemple 10: Pâte de chocolat

Une pâte à tartiner au chocolat est obtenue à partir de crème d'inuline et de poudre de cacao. En utilisant de la crème d'inuline, l'on obtient une excellente texture lisse et onctueuse avec une bonne tartinabilité. La crème d'inuline peut être produite in situ ou séparément.

### Composition (% en poids)

| | |
|---|---|
| Sucre en poudre | 50 |
| Crème d'inuline (30%) | 35 |
| Poudre de cacao | 10 |
| Poudre de lait écrémé | 5 |

### Procédé

Préparer une crème d'inuline (30%) comme mentionné dans l'exemple 1. Ajouter le sucre en poudre, la poudre de lait écrémé et la poudre de cacao dans la crème d'inuline et mélanger vigoureusement.

### Remarque

Dans une expérience comparative, de la poudre d'inuline a été utilisée au lieu de crème d'inuline mais la pâte à tartiner au chocolat ainsi obtenue présentait une sensation en bouche et un goût sableux tout à fait inacceptables.

### Exemple 11: Crème glacée

En crème glacée, l'on peut utiliser de la crème d'inuline pour remplacer une partie de la matière grasse (par exemple 50% de la matière grasse dans une glace de type "Super Premium Ice") ou pour produire une glace virtuellement exempte de matière grasse avec d'excellentes caractéristiques organoleptiques. La glace sans matière grasse de la recette suivante a une valeur calorique de 110 kcal/100 g au lieu d'environ 190 kcal/100 g pour une crème glacée classique contenant 10% de matière grasse, ce qui correspond à une réduction calorique de plus de 40%.

### Composition (% en poids)

| | |
|---|---|
| Lait écrémé | 59 |
| Crème d'inuline (50%) | 20 |
| Sucre | 14 |
| Poudre de lait écrémé | 6 |
| Stabilisant (Grinsted Cremodan SE30) | 0,6 |
| Arôme de vanille (Silesia 111/8309280) | 0,3 |
| Arôme de crème (Quest Int. NN 07172) | 0,1 |

### Procédé

Préparer la crème d'inuline (50%) dans de l'eau ou du lait, comme dans l'exemple 1. Mélanger les ingrédients en poudre et disperser ce mélange dans le lait sous agitation. Ajouter les arômes et la crème d'inuline. Mélanger jusqu'à l'obtention d'un mélange homogène. Chauffer à 80°C et maintenir cette température pendant 30 secondes (pasteurisation). Homogénéiser le mélange. Refroidir à 5°C et laisser reposer quelques heures au réfrigérateur (maturation). Aérer (100% d'overrun) et glacer. Conserver au moins pendant deux jours au congélateur (durcissement).

### Remarque

L'on peut également ajouter quelque 10% d'une crème d'inuline (50%) dans des sorbets afin d'en modifier les caractéristiques de texture tout en leur apportant une consistance plus crémeuse et plus onctueuse qui ressemble davantage à celle des crèmes glacées aux fruits qu'à celle des sorbets classiques.

### Exemple 12: Gaufre

Une réduction de 50% de la teneur en graisses est obtenue en utilisant de la crème d'inuline. L'emploi de la crème assure aussi un mélange bien homogène de la pâte. La crème d'inuline (50%) est utilisée afin d'obtenir une bonne résistance à la température en cours de cuisson.

### Composition (% en poids)

| | |
|---|---|
| Saccharose | 23,6 |
| Farine | 21,4 |
| Oeufs | 21,4 |
| Crème d'inuline (50%) | 10,7 |
| Shortening | 10,7 |
| Eau | 10,7 |
| Farine de soja | 1,2 |
| Carbonate d'ammonium | 0,1 |
| Carbonate de sodium | 0,1 |
| Lécithine | 0,1 |

### Procédé

Préparer la crème d'inuline (50% comme mentionné dans l'exemple 1). Fondre le shortening à 40°C. Ajouter la crème d'inuline, le saccharose, les oeufs et la lécithine. Mélanger les ingrédients dans un mélangeur de type Hobart, pendant une courte période. Ajouter la farine, la farine de soja, les carbonates d'ammonium et de sodium et l'eau. Battre dans un mélangeur de type Hobart pendant 3 minutes. Placer la pâte dans un fer à gaufres à 200°C pendant 2 minutes. Laisser refroidir et emballer.

### Exemple 13: Yoghourt brassé

De la crème d'inuline peut être utilisée pour remplacer entièrement la matière grasse dans tous les types de yoghourt: les yoghourts fermes, les yoghourts brassés et aussi les yoghourts à boire. Les yoghourts contenant de la crème d'inuline offrent une sensation plus onctueuse en bouche et un goût plus doux.

### Composition (% en poids)

| | |
|---|---|
| Lait écrémé | 75 |
| Crème d'inuline (40%) | 20 |
| Ferments lactiques | 3 |
| Poudre de lait écrémé | 2 |

### Procédé

Préparer la crème d'inuline (40%), dans de l'eau ou du lait écrémé (pasteurisé), comme dans l'exemple 1. Ajouter la poudre de lait écrémé au lait et pasteuriser à 90°C pendant 15 minutes dans un échangeur thermique à plaques. Refroidir à 45°C, ajouter la crème d'inuline et les ferments lactiques. Agiter convenablement et incuber en cuves à 45°C pendant environ 4 heures (jusqu'à un pH de 4,5), tout en brassant. Refroidir rapidement à 20°C et conditionner. Refroidir à 5°C et conserver au froid.

### Remarque

Le goût de lait et de crème peut être renforcé en préparant la crème d'inuline dans du lait au lieu d'eau.

### Exemple 14: Assaisonnement pour salades

De la crème d'inuline peut être utilisée pour remplacer partiellement ou totalement l'huile dans différents types d'assaisonnements pour salades. Dans la composition ci-dessous, la teneur en huile a été réduite à 15%, tout en maintenant une texture et un goût excellents. D'autres produits témoignant de la même qualité de goût et de sensation en bouche sont obtenus avec 30% d'huile et 30% de crème d'inuline (50%), sans aucune addition de produits à base d'amidon ou d'autres substituts des graisses.

La crème d'inuline peut éventuellement être préparée in situ au cours du procédé de fabrication (moulin à colloïdes).

### Composition (% en poids)

| | |
|---|---|
| Crème d'inuline (50%) | 35 |
| Eau | 25 |
| Huile de maïs | 15 |
| Vinaigre | 9 |
| Jaune d'oeuf | 5 |
| Amidon de maïs (Cerestar SF 06301) | 5 |
| Sucre | 3 |
| Sel | 1,5 |
| Moutarde | 1,5 |
| Sorbate de potassium | 0,03 |

### Procédé

Préparer la crème d'inuline (50%), comme dans l'exemple 1. Mélanger tous les ingrédients en poudre et les disperser dans l'eau sous agitation. Continuer à mélanger tout en chauffant à 95°C. Maintenir cette température pendant 2 minutes. Ensuite, refroidir immédiatement à 25°C. Transférer dans un mélangeur de type Hobart. Ajouter la moutarde et le jaune d'oeuf, puis la crème d'inuline et le vinaigre, tout en mélangeant à vitesse faible. Ajouter lentement l'huile et continuer à mélanger pendant 5 minutes. Soumettre à l'action d'un moulin à colloïdes, conditionner et conserver au froid.

### Exemple 15: Fourrage pour confiserie et pâtisserie

Un fourrage sans matière grasse est produit en préparant une crème d'inuline in situ. Le fourrage peut être utilisé pour des produits de confiserie ou de pâtisserie. Le fourrage présente un goût sucré et une texture analogue à celle de la matière grasse. Dans cette application, l'emploi de poudre d'inuline est difficile pour des raisons organoleptiques: la poudre d'inuline donnerait une structure sableuse.

### Composition (% en poids)

| | |
|---|---|
| Sirop de sucre (62% de matière sèche) | 79 |
| Inuline | 21 |

### Procédé

Ajouter lentement l'inuline au sirop de sucre tout en agitant. Mélanger pendant 20 minutes avec un Ultra-Turrax® T25 tournant à pleine vitesse. La structure de la crème est formée au bout de 2 heures environ.

### Exemple 16: Chocolat avec une teneur en eau plus élevée

Le chocolat contient normalement entre 0 et 1% d'eau. En ajoutant plus d'eau au chocolat, l'on pourrait obtenir un chocolat avec un point de fusion plus élevé. Ce chocolat serait mieux adapté aux utilisations dans les pays tropicaux et ne fondrait pas aussi vite dans les mains.

Malheureusement, l'addition d'eau supplémentaire provoque une augmentation de la viscosité de la pâte de chocolat et la formation d'agglomérats. Ces effets rendent impossible l'utilisation de la pâte dans des applications telles que tablettes, couverture,...

L'utilisation de la crème d'inuline permet de stabiliser l'eau, cette eau étant ajoutée à la pâte de chocolat sous la forme de crème d'inuline. La pâte de chocolat ne contient alors pas d'agglomérats et a une viscosité autorisant son utilisation en tablettes, couverture,...

Une crème à 50% d'inuline assure une meilleure stabilisation de l'eau qu'une crème à 30%.

### Composition (% en poids)

| | |
|---|---|
| Chocolat au lait | 95 |
| Crème d'inuline (50%) | 5 |

### Procédé

Fondre le chocolat à 45°C, puis le refroidir à 25°C. Chauffer le chocolat à 27°C pour le tempérer et obtenir le degré de fluidité nécessaire au moulage. Mélanger la crème d'inuline à la pâte de chocolat tempérée. Mettre la pâte de chocolat dans des moules, secouer ces moules et les refroidir. Démouler le chocolat et l'emballer.

### Exemple 17: Pâte à tartiner nature

De la crème d'inuline peut être avantageusement utilisée pour remplacer partiellement l'huile et la graisse dans des pâtes à tartiner (de type minarine), à faible teneur en matière grasse. Ainsi, une excellente pâte à tartiner contenant 30% de crème d'inuline (50%) et 20% de matière grasse (m.g.), au lieu de 80% de m.g. dans une margarine ou 40% de m.g. dans une minarine classique, est facilement produite sans altération ni du goût, ni de la texture. La crème d'inuline peut également être produite in situ pendant la fabrication de la pâte à tartiner, comme illustré dans la recette ci-dessous.

### Composition (% en poids)

### Phase A

| | |
|---|---|
| Beurre | 12,50 |
| Mélange d'huiles | 10,00 |
| Monoglycérides (Orffa type S) | 0,47 |
| Lécithine (Lucas Meyer Metarin P) | 0,20 |
| β-carotène (Roche - 30% dans de l'huile) | 0,03 |

### Phase B

| | |
|---|---|
| Eau | 59,7 |
| Inuline (poudre) | 15,0 |
| Gélatine (Sanofi B-I 250 Bl.) | 1,5 |
| Sel | 0,5 |
| Sorbate de potassium | 0,1 |
| Acide lactique | q.s. |

### Procédé

### Phase A

Prémélanger les ingrédients en poudre et les incorporer ensuite dans le mélange d'huiles. Ajouter le beurre fondu et le colorant. Conserver la phase grasse à 55°C.

### Phase B

Disperser la gélatine dans l'eau à 80°C. Ajouter les autres ingrédients et ajuster le pH jusqu'à 5 avec de l'acide lactique. Mélanger jusqu'à l'obtention d'une masse homogène. Conserver le mélange aqueux à 55°C.

### Pâte à tartiner

Incorporer lentement et sous agitation vigoureuse la phase aqueuse dans la dispersion grasse (55°C). Homogénéiser le produit à 200 bar et refroidir rapidement à 12°C. Conditionner en barquettes et conserver réfrigéré.

### Exemple 18: Yoghourt à boire

De la crème d'inuline peut être utilisée pour remplacer la matière grasse, mais aussi pour stabiliser et diminuer efficacement la synérèse, dans tous les types de yoghourt: les yoghourts fermes, les yoghourts brassés et, tout spécialement, les yoghourts à boire. En effet, les yoghourts à base de crème d'inuline ne présentent aucune séparation de sérum en cours de conservation et possèdent une texture et un goût plus onctueux, comparativement aux yoghourts à boire préparés sans inuline ou avec de l'inuline en poudre.

### Composition (% en poids)

| | |
|---|---|
| Lait écrémé | 68 |
| Crème d'inuline (33%) | 30 |
| Ferments lactiques | 2 |

### Procédé

Préparer la crème d'inuline (33%) dans de l'eau ou du lait écrémé (pasteurisé), comme mentionné à l'exemple 1.

Pasteuriser le lait à 90°C pendant 15 minutes, sur un échangeur thermique à plaques.

Refroidir à 42°C, ajouter la crème d'inuline et les ferments lactiques. Mélanger bien et incuber, sous agitation, en cuve à 42°C pendant environ 4 h (jusqu'à un pH de 4,5). Refroidir rapidement à 20°C. Brasser vigoureusement et lisser le yoghourt (homogénéisation à 200 bar).

Conditionner, refroidir à 5°C et conserver réfrigéré.

### Commentaire

Le yoghourt à boire contenant 10% d'inuline ajoutée sous la forme d'une crème (33%) ne présente aucune séparation de sérum en cours de conservation, même après un mois. En comparaison, le même yoghourt sans inuline présente une séparation évidente avec 50% de sérum à la surface et celui avec 10% d'inuline en poudre montre toujours 30% de sérum.

### Remarque

Le goût de lait et de crème peut être augmenté en préparant la crème d'inuline dans du lait au lieu d'eau.

### Exemple 19: Pâté de foie

Le pâté de foie est un exemple typique de produits carnés dans lesquels la crème d'inuline peut être utilisée pour remplacer une partie des graisses, par exemple 50%, et pour réduire le taux de cholestérol. Dans la recette suivante, nous avons remplacé 30% de graisse (lard) par 15% de graisse et 15% de crème d'inuline (30%), ce qui permet une réduction calorique de plus de 35%. Sans préparer une crème d'inuline, il n'est pas possible d'ajouter de manière homogène une telle quantité d'inuline dans le pâté car la fine poudre d'inuline adhère au cutter et forme des grumeaux. La crème d'inuline offre donc un avantage technologique en comparaison avec de l'inuline en poudre.

### Composition (% en poids)

| | |
|---|---|
| Foie de porc | 32 |
| Lait écrémé | 32 |
| Lard | 15 |
| Crème d'inuline (30%) | 15 |
| Farine de riz | 3 |
| Sel | 1,5 |
| Epices | 1,5 |

### Procédé

Préparer la crème d'inuline (30%), de préférence dans du lait écrémé, comme mentionné dans l'exemple 1. Pocher le lard dans de l'eau à 90°C pendant 10 minutes. Ajouter les ingrédients dans le cutter dans l'ordre suivant:
- foie (dégrossissement),
- farine de riz, sel et épices (saupoudrage),
- lard (dégrossissement),
- une partie du lait,
- la crème d'inuline,
- le reste du lait.

Mélanger convenablement et affiner jusqu'à la finesse de grain souhaitée. Mouler dans des terrines et cuire au four à 90°C (jusqu'à 70°C au coeur du pâté). Refroidir et conserver au froid.

### Remarque

Dans certaines applications en produits carnés, le goût légèrement sucré de l'inuline pourrait être un problème; la teneur résiduelle en sucres inférieurs (glucose, fructose et saccharose) dans l'inuline peut dans ce cas être réduite par différentes méthodes.

### Exemple 20: Pâte feuilletée

Dans de la pâte feuilletée, la moitié de la margarine utilisée entre les feuilles peut aisément être remplacée par de la crème d'inuline. La structure de la crème d'inuline facilite le mélange avec la margarine. Si l'on utilise de la poudre d'inuline dans la margarine, seule une faible quantité de cette poudre peut être mélangée et donc un moindre degré de substitution de graisses peut être atteint. L'emploi d'une solution d'inuline est également impossible car la quantité d'eau empêche la formation d'un mélange homogène avec la margarine. L'emploi de crème à 50% d'inuline est nécessaire pour assurer une bonne résistance à la chaleur.

### Composition (% en poids)

| | |
|---|---|
| Farine | 35,5 |
| Eau | 14,7 |
| Shortening | 5,1 |
| Saccharose | 4,2 |
| Oeufs | 4,2 |
| Levure | 2,1 |
| Sel | 0,9 |
| Emulsifiant | 0,3 |
| Margarine | 16,5 |
| Crème d'inuline (50%) | 16,5 |

### Procédé

Préparer la crème d'inuline (50%), comme dans l'exemple 1. Ajouter le saccharose, l'eau, les oeufs, la levure, le sel et l'émulsifiant au shortening fondu. Ajouter la farine et pétrir la pâte pendant une courte période dans un malaxeur de type Hobart à faible vitesse. Mélanger ensuite la crème d'inuline à la margarine dans un mélangeur de type Hobart à faible vitesse, jusqu'à l'obtention une pâte homogène. Laminer la pâte pour former une feuille, étaler le mélange de crème d'inuline et de margarine sur la pâte et replier la pâte en 3 x 2. Laminer la feuille. Laisser reposer la feuille pendant une heure à 5°C. Replier à nouveau la feuille en 3 x 1. Laisser reposer pendant 60 minutes à 35°C. Donner à la feuille la forme désirée et cuire pendant 14 minutes à 220°C.

### Exemple 21: Pudding

Dans les desserts lactés, par exemple dans du pudding, l'on peut utiliser de la crème d'inuline pour remplacer toute la matière grasse et conférer une texture plus lisse et plus crémeuse.

### Composition (% en poids)

| | |
|---|---|
| Lait écrémé | 60 |
| Crème d'inuline (50%) | 20 |
| Sucre | 10 |
| Poudre de lait écrémé | 8 |
| Amidon de maïs (Cerestar SF 06304) | 1,7 |
| Carraghénane/gomme guar (Sanofi B-I Flanogen RS2) | 0,225 |
| β-carotène (Univ. Flavors 25142) | 0,050 |
| Arôme de vanille (Sanofi B-I LC9303) | 0,025 |

### Procédé

Préparer la crème d'inuline (50%), dans de l'eau ou du lait écrémé (pasteurisé), comme dans l'exemple 1. Mélanger tous les ingrédients en poudre et les disperser dans le lait sous agitation. Chauffer à 95°C et maintenir cette température pendant 25 minutes. Refroidir à 70°C avant d'ajouter le colorant, l'arôme et la crème d'inuline, puis mélanger. Conditionner, refroidir jusqu'à 5°C et conserver au froid.

### Exemple 22: Chocolat à la crème fraîche

Des chocolats de goûts différents sont obtenus par diverses adjonctions comme, par exemple, le croquant, le nougat, le gianduja, la crème de lait,... La concentration minimale des adjonctions est souvent de 5%. Cependant, l'adjonction de la crème de lait pose des problèmes techniques. La crème contient, en effet, environ 53% d'eau, ce qui cause une augmentation de la viscosité et la formation d'agglomérats.

L'eau de la crème peut être stabilisée par l'addition d'inuline sous forte agitation. L'on obtient ainsi une crème d'inuline, dans laquelle l'eau se trouve sous forme liée. Des tests ont montré qu'une crème à 40% d'inuline donne la meilleure stabilisation. La crème d'inuline peut alors être ajoutée à la pâte de chocolat sans formation d'agglomérats et avec une viscosité de la pâte, compatible avec des applications telles que tablettes, couverture,...

### Formulation % en poids

### Crème d'inuline (40%)

| | |
|---|---|
| Crème fraîche (47% m.s.) | 60 |
| Inuline | 40 |

### Chocolat

| | |
|---|---|
| Chocolat au lait | 92 |
| Crème d'inuline (40%) | 8 |

### Procédé

### Préparer la crème (40%) comme suit:

Ajouter peu à peu l'inuline à la crème fraîche sous forte agitation, par exemple avec un mixer de cuisine. Mixer jusqu'à ce que le mélange soit homogène. Fondre le chocolat à 45°C et le refroidir ensuite à 25°C. Chauffer le chocolat à 27°C afin de le tempérer et d'obtenir le degré de fluidité requis pour le moulage. Mélanger la crème à la pâte de chocolat tempérée. Mettre le chocolat dans des moules, les secouer et les refroidir. Démouler le chocolat et l'envelopper.

### Exemple 23: Préparation d'une crème d'inuline en utilisant un réacteur à ultrasons

Disposer 300 ml d'eau à température ambiante dans un bécher et placer le Sonoreactor®ʼ d'Undatim Ultrasonics dans le bécher. Ajouter 200 g d'inuline par petites quantités ou effectuer un prémixage avec un mixeur pendant 2 minutes, afin d'éviter la formation de grumeaux. Le Sonoreactor® est réglé à une fréquence de 20 KHz. La crème d'inuline se forme déjà dans le bécher après 10 minutes, la durée de la réaction étant mesurée à partir du moment où la totalité de l'inuline a été ajoutée.

La crème d'inuline prend sa forme et sa consistance définitive après 12 heures, de maintien à température ambiante ou dans des conditions de conservation plus froides. Si la réaction par ultrasons est arrêtée après 5 minutes, la composition est toujours sous forme liquide, mais elle atteint une forme stable en étant maintenue durant 12 heures à température ambiante ou dans des conditions de conservation plus froides. La crème d'inuline préparée par ultrasons a la même apparence que celle préparée par les autres dispositifs de mixage décrits dans l'exemple 1, mais le temps nécessaire pour la formation de la crème est plus court et la crème obtenue est plus stable et possède une meilleure consistance.

En modifiant les quantités d'eau et d'inuline à respectivement 350 ml et 150 g, la durée de préparation par ultra-sons pour obtenir une crème stable après 12 heures de maintien à température ambiante ou dans des conditions de conservation plus froides, s'accroît à 15 minutes.

Les valeurs de force en gelée, mesurées avec un analyseur de texture Stevens LFRA, des crèmes d'inuline avec 30% de substance sèche, réalisées par ultrasons, avec un homogénéisateur à 200 bar, avec un hydroshear et avec un Ultra-Turrax® sont respectivement de 225 g, 200 g, 150 g et 100 g.

Avec le Sonoreactor® ou tout autre dispositif basé sur l'application d'ultrasons, une crème d'inuline peut être obtenue en combinant plusieurs de ces dispositifs selon n'importe quelle combinaison de fréquence et d'intensité. Si l'on change la concentration, donc la viscosité, la pression ou la température, la fréquence et l'intensité du procédé doivent être adaptées en conséquence pour obtenir une crème d'inuline avec une stabilité et une consistance satisfaisantes.

En complément à ces dispositifs à ultrasons, un agitateur magnétique ou tout autre agitateur peut être utilisé pour obtenir une meilleure dispersion des particules d'inuline dans le milieu. En outre, une meilleure dispersion et une crème d'inuline plus stables doivent être obtenues si l'on combine un dispositif à ultrasons avec un ou plusieurs des dispositifs de mixage décrits dans l'exemple 1.

### Exemple 24: Caractéristiques organoleptiques de deux types d'inuline

Une composition de crème à base d'inuline extraite de tubercules de Dahlia (9005-80-5) de Sigma (n° 1-3754 lot 79F7115) contenant uniquement des chaînes GFn où n varie de 10 à plus de 60, est préparée comme à l'exemple 1. Le degré de polymérisation moyen de cette inuline est égal à 29.

La crème ainsi obtenue présente une texture et une sensation en bouche sèches, fibreuses et sablonneuses, nettement moins lisses et moins onctueuses qu'à l'exemple 1. Le goût est également différent: non plus neutre mais rappelant légèrement le carton.

Les courtes chaînes GFn où n varie de 2 à 9, présentes dans l'inuline utilisée à l'exemple 1, contribuent donc efficacement à la texture onctueuse et crémeuse, ainsi qu'au goût neutre, des crèmes d'inuline.

## Revendications

1. Composition ayant une structure crémeuse et comprenant au moins un fructane et un liquide caractérisé en ce que le fructane est l'élément essentiel pour la formation de ladite structure crémeuse.

2. Composition selon la revendication 1, caractérisée en ce que le liquide est de l'eau, du lait, du blanc d'oeuf, du jaune d'oeuf ou du sirop de sucre.

3. Composition selon la revendication 1 ou 2, caractérisée en ce que le fructane est de l'inuline ou du levane.

4. Composition selon la revendication 3, caractérisée en ce que le fructane est constitué en partie ou en totalité par de l'inuline ou du levane déramifié, de l'inuline ou du levane ramifié et/ou de l'inuline ou du levane partiellement hydrolysé.

5. Composition selon la revendication 3 ou 4, caractérisée en ce que la concentration en inuline ou en levane dans la composition varie de 5 à 85 %.

6. Composition selon l'une quelconque des revendications 3 à 5, caractérisée en ce que l'inuline contient plus de 10% d'oligosaccharides avec un degré de polymérisation compris entre 2 et 10.

7. Composition selon l'une quelconque des revendications 1 à 6, caractérisée en ce qu'elle comprend un substitut des graisses, un agent épaississant, un agent gélifiant, un stabilisateur et/ou un dispersant.

8. Composition selon l'une quelconque des revendications 1 à 7, caractérisée en ce qu'elle comprend un composant qui influence la mise en solution et la dispersion du fructane et/ou diminue l'agglomération de la composition lors de la reconstitution après séchage de la composition.

9. Composition selon la revendication 8, caractérisée en ce que le composant précité est choisi parmi le groupe constitué par les hydrates de carbone, les sels, les protéines, les gommes, de préférence les gommes de xanthane, de caroube, de guar, du carboxyméthyl cellulose, les carraghénanes, les alginates, les graisses ou un mélange de ceux-ci.

10. Composition selon l'une quelconque des revendications 1 à 9, caractérisée en ce qu'elle est préparée à partir de composants séchés ou coséchés.

11. Composition selon l'une quelconque des revendications 8 à 10 caractérisée en ce qu'elle est séchée.

12. Procédé de préparation d'une composition selon l'une quelconque des revendications 1 à 10 caractérisé en ce qu'au moins un fructane est mélangé dans un liquide et est soumis à des forces de cisaillement importantes.

13. Produit alimentaire ou préparation destinée à la fabrication d'un produit alimentaire caractérisé en ce qu'il ou elle comprend une composition selon l'une quelconque des revendications précédentes 1 à 11.

14. Produit alimentaire ou préparation destinée à la fabrication d'un produit alimentaire selon la revendication 13 caractérisé en ce qu'il ou elle comprend une composition selon l'une quelconque des revendications précédentes 1 à 11 en dehors des composants alimentaires usuels.

15. Produit alimentaire ou préparation destinée à la fabrication d'un produit alimentaire selon la revendication 13, caractérisé en ce qu'il ou elle comprend une composition selon l'une quelconque des revendications 1 à 11, en tant que substitut partiel ou total des graisses.

16. Produit alimentaire comprenant un pourcentage plus élevé d'eau ou préparation destinée à la fabrication dudit produit alimentaire selon la revendication 13, caractérisé en ce qu'il ou elle comprend une composition selon l'une quelconque des revendications 1 à 11.

17. Produit alimentaire selon la revendication 15 ou 16 caractérise qu'il est du chocolat.

18. Procédé de préparation d'un produit alimentaire ou d'une préparation destinée à la fabrication d'un produit alimentaire selon l'une quelconque des revendications 13 à 17 caractérisé en ce que l'on ajoute à un produit alimentaire ou à une préparation une composition selon l'une quelconque des revendications 1 à 11.

19. Procédé de préparation d'un produit alimentaire ou d'une préparation destinée à la fabrication d'un produit alimentaire, caractérisé en ce que l'on forme la composition selon l'une quelconque des revendications 1 à 11 in situ, en soumettant au moins un fructane ou un liquide et les autres constituants alimentaires à des forces de cisaillement importantes.

20. Utilisation de la composition selon l'une quelconque des revendications 1 à 11 sous la forme d'un produit alimentaire ou d'une préparation destinée à la fabrication d'un produit alimentaire pour l'humain ou l'animal.

21. Utilisation selon la revendication 20 de la composition selon l'une quelconque des revendications 1 à 11, sous la forme (i) d'un substitut des graisses ou des huiles ou (ii) d'un substitut d'hydrates de carbone ou (iii) d'un stabilisant.

22. Utilisation selon la revendication 20 ou 21 de la composition selon l'une quelconque des revendications 1 à 11 afin d'incorporer une plus grande quantité d'eau dans un produit alimentaire ou dans une préparation destinée à la fabrication d'un produit alimentaire.

23. Utilisation selon la revendication 22 dans laquelle le produit alimentaire précité est du chocolat.

## Claims

1. Composition having a creamy structure and comprising at least one fructan and a liquid, characterized in that the fructan is the essential element for forming said creamy structure.

2. Composition according to claim 1, characterized in that said liquid is water, milk, egg white, egg yolk or sugar syrup.

3. Composition according to claim 1 or 2, characterized in that said fructan is inulin or levan.

4. Composition according to claim 3, characterized in that said fructan, partly or wholly, consists of unbranched inulin or levan, branched inulin or levan and/or partially hydrolyzed inulin or levan.

5. Composition according to claim 3 or 4, characterized in that the inulin or levan concentration in the composition varies from 5 to 85%.

6. Composition according to any of claims 3 to 5, characterized in that the inulin contains more than 10% oligosaccharides with a polymerization degree between 2 and 10.

7. Composition according to any of claims 1 to 6, characterized in that it comprises a fat substitute, a thickening agent, a gelling agent, a stabilizer and/or a dispersant agent.

8. Composition according to any of claims 1 to 7, characterized in that it comprises a component which influences the dissolution and dispersion of the fructan and/or reduces the agglomeration of the composition during reconstitution after drying the composition.

9. Composition according to claim 8, characterized in that said component is chosen from the group consisting of carbohydrates, salts, proteins, gums, preferably xanthan, carob or guar gums, carboxymethyl cellulose, carrageenans, alginates, fats or mixtures thereof.

10. Composition according to any of claims 1 to 9, characterized in that it is prepared from dried or co-dried components.

11. Composition according to any of claims 8 to 10, characterized in that it is dried.

12. Process for the preparation of a composition according to any of claims 1 to 10, characterized in that at least one fructan is mixed with a liquid and is submitted to high shear forces.

13. Food product or preparation intended for the manufacture of a food product, characterized in that it comprises a composition according to any of preceding claims 1 to 11.

14. Food product or preparation intended for the manufacture of a food product according to claim 13, characterized in that it comprises a composition according to any of preceding claims 1 to 11, besides the usual food product components.

15. Food product or preparation intended for the manufacture of a food product according to claim 13, characterized in that it comprises a composition according to any of claims 1 to 11 as a partial or total fat substitute.

16. Food product comprising a higher water percentage or preparation intended for the manufacture of food product according to claim 13, characterized in that it comprises a composition according to any of claims 1 to 11.

17. Food product according to claim 15 or 16, characterized in that it is chocolate.

18. Process for making a food product or a preparation intended for the manufacture of a food product according to any of claims 13 to 17, characterized in that a composition according to any of claims 1 to 11 is added to a food product or a preparation.

19. Process for making a food product or a preparation intended for the manufacture of a food product, characterized in that the composition according to any of claims 1 to 11 is formed in situ, by submitting at least one fructan or a liquid and the other components of the food product to high shear forces.

20. Use of the composition according to any of claims 1 to 11 as a food product or a preparation intended for the manufacture of a food product for human or animals.

21. Use according to claim 20 of the composition according to any of claims 1 to 11 in the form (i) of a fat or oil substitute or (ii) of a carbohydrate substitute or (iii) of a stabilizer.

22. Use according to claim 20 or 21 of the composition according to any of claims 1 to 11 so as to incorporate a higher water content into a food product or a preparation intended for the manufacture of a food product.

23. Use according to claim 22 wherein said food product is chocolate.

## Patentansprüche

1. Zusammensetzung, die eine kremige Struktur hat und mindestens ein Fruktan und eine Flüssigkeit aufweist, dadurch gekennzeichnet, daß das Fruktan das wesentliche Element für die Bildung der kremigen Struktur ist.

2. Zusammensetzung gemäß Anspruch 1, dadurch gekennzeichnet, daß die Flüssigkeit Wasser, Milch, Eiweiß, Eigelb oder Zuckersirup ist.

3. Zusammensetzung gemaß Anspruch 1 oder 2, dadurch gekennzeichnet, daß das Fruktan Inulin oder Levan ist.

4. Zusammensetzung gemäß Anspruch 3, dadurch gekennzeichnet, daß das Fruktan teilweise oder ganz aus entzweigtem Inulin oder Levan, verzweigtem Inulin oder Levan und/oder teilweise hydrolysiertem Inulin oder Levan besteht.

5. Zusammensetzung gemäß Anspruch 3 oder 4, dadurch gekennzeichnet, daß die Inulin- oder Levankonzentration in der Zusammensetzung zwischen 5 und 85% variiert.

6. Zusammensetzung gemäß irgendeinem der Ansprüche 3 bis 5, dadurch gekennzeichnet, daß das Inulin mehr als 10% Oligosaccharide mit einem Polymerisationsgrad zwischen 2 und 10 enthält.

7. Zusammensetzung gemäß irgendeinem der Ansprüche 1 bis 6, dadurch gekennzeichnet, daß sie einen Fettersatzstoff, ein Verdickungsmittel, ein Geliermittel, einen Stabilisator und/oder ein Dispersionsmittel aufweist.

8. Zusammensetzung gemäß irgendeinem der Ansprüche 1 bis 7, dadurch gekennzeichnet, daß sie einen Bestandteil aufweist, der bei der Rekonstitution nach Trocknung der Zusammensetzung die Auflösung und die Dispersion des Fruktans beeinflußt und/oder die Agglomeration der Zusammensetzung vermindert.

9. Zusammensetzung gemäß Anspruch 8, dadurch gekennzeichnet, daß der obenerwähnte Bestandteil aus der Gruppe ausgewählt ist, die von Kohlehydraten, Salzen, Proteinen, Gummis, vorzugsweise Xanthan-, Karube- oder Guargummis, Carboxymethylcellulose, Carraghenanen, Alginaten, Fetten oder einem Gemisch davon gebildet wird.

10. Zusammensetzung gemäß irgendeinem der Ansprüche 1 bis 9, dadurch gekennzeichnet, daß sie aus getrockneten oder mitgetrockneten Bestandteilen hergestellt ist.

11. Zusammensetzung gemäß irgendeinem der Ansprüche 8 bis 10, dadurch gekennzeichnete, daß sie getrocknet wird.

12. Verfahren zur Herstellung einer Zusammensetzung gemäß irgendeinem der Ansprüche 1 bis 10, dadurch gekennzeichnet, daß mindestens ein Fruktan mit einer Flüssigkeit vermischt wird und großen Scherkräften unterworfen wird.

13. Nahrungsmittel, oder vorbereitetes Produkt, das zur Herstellung eines Nahrungsmittels bestimmt ist, dadurch gekennzeichnet, daß es eine Zusammensetzung gemäß irgendeinem der vorhergehenden Ansprüche 1 bis 11 aufweist.

14. Nahrungsmittel, oder vorbereitetes Produkt, das zur Herstellung eines Nahrungsmittels bestimmt ist, gemäß Anspruch 13, dadurch gekennzeichnet, daß es außer den üblichen Nahrungsmittelbestandteilen eine Zusammensetzung gemäß irgendeinem der vorhergehenden Ansprüche 1 bis 11 aufweist.

15. Nahrungsmittel, oder vorbereitetes Produkt, das zur Herstellung eines Nahrungsmittels bestimmt ist, gemäß Anspruch 13, dadurch gekennzeichnet, daß es als teilweiser oder vollständiger Fettersatzstoff eine Zusammensetzung gemäß irgendeinem der Ansprüche 1 bis 11 aufweist.

16. Nahrungsmittel, das einen höheren Prozentsatz an Wasser aufweist, oder vorbereitetes Produkt, das zur Herstellung des Nahrungsmittels bestimmt ist, gemäß Anspruch 13, dadurch gekennzeichnet, daß es eine Zusammensetzung gemäß irgendeinem der Ansprüche 1 bis 11 aufweist.

17. Nahrungsmittel gemäß Anspruch 15 oder 16, dadurch gekennzeichnet, daß es Schokolade ist.

18. Verfahren zur Herstellung eines Nahrungsmittels, oder eines vorbereiteten Produkts, das zur Herstellung eines Nahrungsmittels bestimmt ist, gemäß irgendeinem der Ansprüche 13 bis 17, dadurch gekennzeichnet, daß zu einem Nahrungsmittel oder einem vorbereiteten Produkt eine Zusammensetzung gemäß irgendeinem der Ansprüche 1 bis 11 zugegeben wird.

19. Verfahren zur Herstellung eines Nahrungsmittels, oder eines vorbereiteten Produkts, das zur Herstellung eines Nahrungsmittels bestimmt ist, dadurch gekennzeichnet, daß die Zusammensetzung gemäß irgendeinem der Ansprüche 1 bis 11 in situ gebildet wird, wozu mindestens ein Fruktan oder eine Flüssigkeit und die anderen Nahrungsmittelbestandteile großen Scherkräften unterworfen werden.

20. Verwendung der Zusammensetzung gemäß irgendeinem der Ansprüche 1 bis 11 in Form eines Nahrungsmittels, oder eines vorbereiteten Produkts, das zur Herstellung eines Nahrungsmittels bestimmt ist, für Menschen oder Tiere.

21. Verwendung, gemäß Anspruch 20, der Zusammensetzung gemäß irgendeinem der Ansprüche 1 bis 11, in Form (i) eines Fett- oder Ölersatzstoffs, oder (ii) eines Kohlehydratersatzstoffs, oder (iii) eines Stabilisators.

22. Verwendung, gemäß Anspruch 20 oder 21, der Zusammensetzung gemäß irgendeinem der Ansprüche 1 bis 11, um eine größere Menge Wasser in ein Nahrungsmittel, oder in ein vorbereitetes Produkt, das zur Herstellung eines Nahrungsmittels bestimmt ist, einzubringen.

23. Verwendung, gemäß Anspruch 22, wobei das obenerwähnte Nahrungsmittel Schokolade ist.
